# EUROPEAN PATENT APPLICATION

(11) **EP 2 530 204 A2**
(43) Date of publication of application: **05.12.2012**
(21) Application number: 12170737.6
(22) Date of filing: 04.06.2012
(51) Int. Cl.: E02B 8/08

(54) **Barrier for regulating the level in a watercourse**

(30) Priority: 03.06.2011 NL 2006894
(71) Applicant: A.R.P. Weg- en Waterbouw, 5243 RG Rosmalen (NL)
(72) Inventor: Pennings, Alphonsius René, 5243 RG Rosmalen (NL)
(74) Representative: Langenhuijsen, Bastiaan Wilhelmus Herman

(57) **Abstract**

The water level of a watercourse can be regulated by applying a barrier in order to hold water longer in higher areas so as to prevent these areas drying out. The use of a barrier can also prevent rapid inundation of lower-lying areas. The invention relates to a barrier for regulating the level in a watercourse.

## Description

The invention relates to a barrier for regulating the level in a watercourse.

The water level of a watercourse can be regulated by applying a barrier in order to hold water longer in higher areas so as to prevent these areas drying out. The use of a barrier can also prevent (rapid) inundation of lower-lying areas. At the same time barriers usually form an insurmountable obstacle for fish present in the watercourse. In order to spawn determined species of fish tend to trek upstream where the water is cleaner and richer in oxygen. The barrier can form a life-threatening barrier for these fish species. Barriers can also result in a considerable limitation in the freedom of fish not in the habit of spawning upstream.

In order to obviate the above stated problem so-called fish ladders have been constructed adjacently of some barriers and consisting of a cascade of small pools or basins flowing into each other, whereby a water ladder is in fact generated via which fish can move from a lower water body to a higher water body. An example of a known fish pass for use adjacently of a barrier is described in NL 1031738. The known fish pass is in general relatively voluminous however, this not only being costly but moreover not always desirable from a practical and aesthetic viewpoint, and sometimes even being impossible. Furthermore, the known fish pass cannot be applied at low water level, or hardly so, since the fish pass can then generally no longer form a water bridge between the lower water body and the higher water body.

An object of the invention is to provide a barrier provided with an improved fish pass.

The invention provides for this purpose a barrier of the type stated in the preamble, comprising: a plurality of barrier wings which enclose a passage provided with a threshold in order to allow water to flow from a first higher-lying water body to a second lower-lying water body, wherein at least one barrier wing forms a housing for a fish pass via which fish can swim from the second water body to the first water body, comprising: a plurality of migration chambers connected in series, wherein successive migration chambers are separated from each other by means of a separating wall provided with at least one migration opening, wherein each separating wall is provided with at least one adjusting element for regulating the effective height positioning of the associated migration opening; and operating means coupled to the threshold and the adjusting elements for interrelated regulation of the height positioning of both the threshold and the migration openings. By relating the effective height positioning of the migration openings to the desired height positioning of the threshold an advantageous balance between the water level in the watercourse and the height positioning of the migration openings of the fish pass can be permanently guaranteed as far as possible, this considerably enhancing the effectiveness and usefulness of the fish pass. By moreover integrating the fish pass with the barrier, wherein the fish pass is in fact incorporated in the barrier, a relatively compact fish pass can be realized which can be applied particularly advantageously from an aesthetic and practical viewpoint. The term barrier is also interpreted broadly in the context of this patent specification, and can also include a dam, lock, pumping plant or other type of hydraulic-engineering structure with which a separation in level can be realized. The fish pass will generally further comprise at least one fish outlet with a water inflow opening which connects to at least one first migration chamber and is for placing in the first water body, and at least one fish inlet with a water outflow opening which connects to at least one final migration chamber and is for placing in the second water body.

In an embodiment of the barrier according to the invention the operating means comprise at least one drive shaft coupled to the threshold and the adjusting elements. The height positioning of the threshold as well as the height positioning of the adjusting elements, and thereby the effective height positioning of the migration openings, can be regulated by means of axial rotation of the drive shaft (drive rod). It is possible here to envisage the threshold forming part of a height-adjustable slide, although it is also possible to envisage the threshold forming part of a tiltable barrier valve, wherein the operating means are adapted to bring about tilting of the barrier valve. When a drive shaft is applied, tilting of the barrier valve can be realized in relatively simple manner by providing for instance an outer side of the drive rod with a toothing which co-acts with a gear rack forming part of the tiltable barrier valve.

At least one adjusting element, more preferably each adjusting element, is preferably connected displaceably, in particular slidably, to the separating wall in order to enable at least partial covering of the associated migration opening. The adjusting element is usually formed here by a slide which is slidable substantially parallel to the separating wall. Use is generally made here of a guide for the purpose of guiding the slide and displacing the slide along a predefined path. It is possible here to envisage at least a part of an upper side of the slide defining at least a part of an underside of the migration opening. In an alternative embodiment the slide can be embodied as a frame enclosing a migration opening, the slide being adapted to at least partially close an adjacent (larger and usually elongate) migration opening in the separating wall.

In a preferred embodiment the operating means are adapted to change the height positioning of the threshold and the migration openings in the same direction. This means that, when the height positioning of the threshold increases, this is also the case for the adjusting elements, and thereby for the migration openings. In particular preferred embodiment the operating means are adapted to change the height positioning of the threshold and the migration openings to the same extent. A lowering/raising of the threshold by *x* cm will then also result in a (simultaneous) lowering/raising of the migration openings by (about) *x* cm.

The operating means will generally comprise at least one force-transmitting element, in particular a transmission, for the purpose of being able to realize the coupling to the threshold and the adjusting elements. Such force-transmitting elements can be of very diverse nature and can for instance be formed by rods, chains, toothed wheels and gear racks. The use of a transmission can facilitate displacement of the threshold and the adjusting elements. The operating means can otherwise be operated manually and/or in automated manner.

In a particular preferred embodiment a number of migration chambers are positioned in a first barrier wing and a number of migration chambers in a second wing. It is possible here to envisage a plurality of separate fish passes being created in the same barrier. It is however usually advantageous to connect all migration chambers serially to each other so as to be able to increase the range of the fish pass in order to allow fish to move from the (lower) second water body to the (higher) first water body. It is advantageous here for at least one migration chamber positioned in the first barrier wing to be connected via at least one aqueduct to at least one migration chamber positioned in the second barrier wing, wherein the aqueduct extends through the passage. A serial connection is otherwise understood to mean that the migration chambers are in communication with each other such that migration of both water (downstream) and fish (downstream and upstream) is possible. When a barrier wing is provided with migration chambers, a barrier wing is also referred to as a compartment (of the housing of the barrier).

The aqueduct extends through the passage of the barrier here and thus connects two migration chambers of different barrier wings to each other. The aqueduct can be oriented substantially horizontally here, whereby both migration chambers have substantially the same level. It is however also possible to envisage the aqueduct taking a (slightly) sloping form, whereby the two migration chambers will generally have a differing water level. In order to not allow the aqueduct to obstruct the regular watercourse, it is generally advantageous for (an underside of) the aqueduct to be located at a distance from the threshold, and more preferably to be located at a higher level than the threshold, whereby water flowing via the passage over the threshold will not come into contact with the aqueduct.

It is also advantageous for an upper side of the fish pass to take an at least partially light-transmitting form, which will generally enhance the fish well-being. The same applies for the upper side of the migration chambers. The migration chambers and the optionally applied aqueduct can optionally be covered by means of gratings.

The height positioning of the migration openings of successive separating walls (baffles) preferably decreases, and preferably decreases gradually, in the direction of the final migration chamber, so in the direction of the lower water body. It is advantageous here that the maximum height difference between the migration openings of successive baffles amounts to 7.5 cm, whereby fish can move sufficiently easily from one migration chamber to a subsequent migration chamber.

In an advantageous embodiment of the barrier the fish inlet and/or the fish outlet are provided with a closing element. The fish pass can be closed by applying the one or more closing elements, for instance in the case of a low level during dry periods.

Although not essential, the passage will generally form a substantially central part of the barrier. The advantage of this positioning is that the depth of a central part of the watercourse is greater than the depth of a peripheral part of the watercourse, whereby a correct operation of the barrier can in this way be guaranteed. The fish inlet and/or the fish outlet preferably also connect to a deeper (central) part of the watercourse in order to also guarantee as far as possible a correct operation of the fish pass. The fish inlet and/or the fish outlet are therefore preferably positioned close to the (central) passage of the barrier.

The invention will be elucidated on the basis of non-limitative exemplary embodiments shown in the following figures. Herein:
figure 1 is a top view of a barrier according to the invention comprising a fish pass,
figure 2 shows a cross-section A-A of the barrier according to figure 1,
figure 3 shows a cross-section B-B of the barrier according to figure 1,
figure 4 shows a cross-section C-C of the barrier according to figure 1, and
figure 5 shows a schematic representation of the water variation in the fish pass of the barrier according to figure 1.

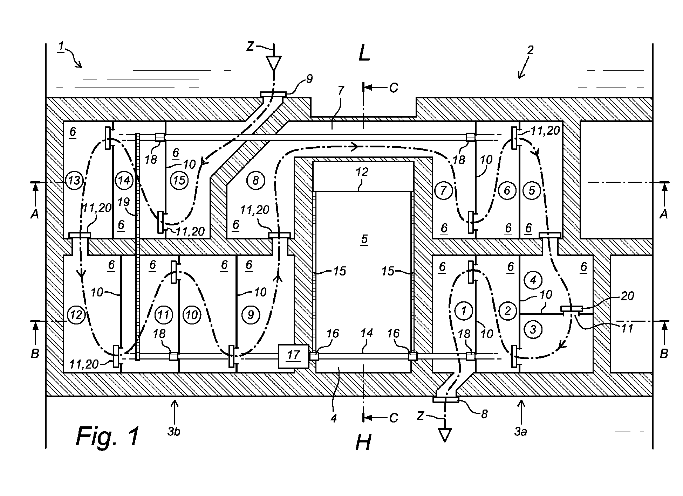

Figure 1 is a top view of a barrier 2 according to the invention comprising a fish pass 1. Barrier 2 is placed here in a watercourse and separates a higher-lying water body (H) and a lower-lying water body (L). Barrier 2 comprises for this purpose a housing 3 comprising a first compartment 3a and a second compartment 3b. Created between first compartment 3a and second compartment 3b is a passage 4 via which water can displace from the higher water body (H) to the lower water body (L). Arranged in the passage is a tiltable barrier valve 5 connected to housing 3. The tiltable barrier valve 5 is adapted to regulate the level of the higher water body (H) and the lower water body (L). Fish pass 1 is adapted to allow fish to swim from the lower water body (L) to the higher water body (H). In this exemplary embodiment fish pass 1 comprises for this purpose fifteen migration chambers 6 connected successively to each other so that a serial connection of migration chambers 6 is realized. Migration chambers 6 are also identified in the figure by means of numerals "1" to "15". Of the fifteen migration chambers 6 seven migration chambers 6 are located in the first compartment 3a and eight migration chambers 6 are located in the second compartment 3b, wherein the migration chamber "7" and migration chamber "8" are mutually connected by means of an aqueduct 7 extending through passage 4. Migration chamber "1" is connected here via a closing element 8 to the higher water body (H) and migration chamber "15" is connected here via a closing element 9 to the lower water body (L).

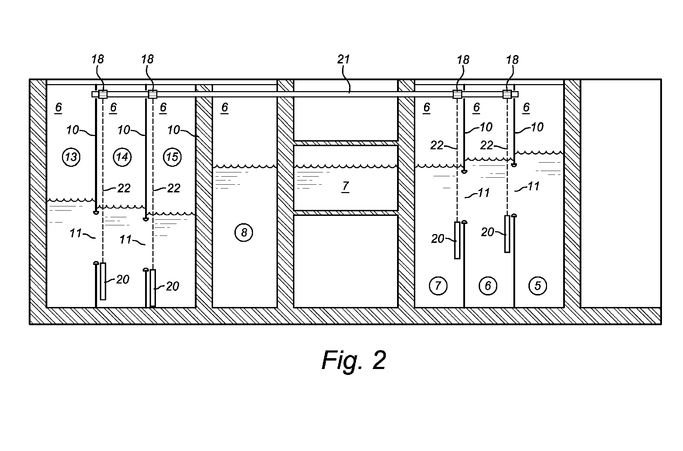

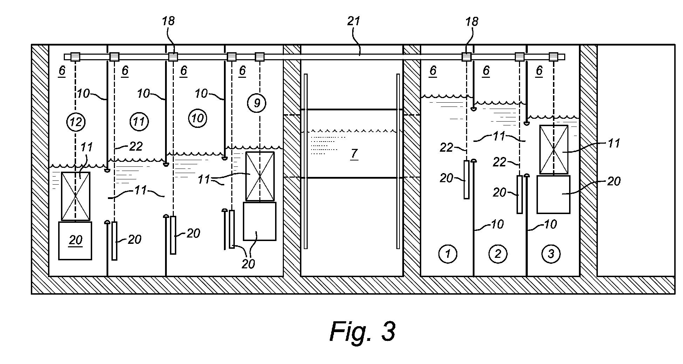

Successive migration chambers 6 are mutually separated by means of a baffle 10 (or wall) provided with a migration opening 11. The height positioning of migration openings 11 decreases substantially gradually in the direction of migration chamber "15", whereby the water level in migration chambers 6 decreases substantially gradually from the water level of the higher water body (H) to the water level of the lower water body (L). The size of migration openings 11 is such that water and fish can migrate via migration opening 11, but is on the other hand preferably so small that baffle 11 offers sufficient resistance to be able to realize a difference in water level between adjacent migration chambers 6. The difference in water level in mutually connecting migration chambers 6 is so small here that fish can move relatively unimpeded via migration chambers 6 from the lower water body (L) to the higher water body (H), and vice versa. The route to be followed by fish through fish pass 1 in order to be able to swim from the lower water body (L) to the higher water body (H) is indicated by means of the curved arrow Z, wherein it is clearly visible that migration openings 11 do not lie in line with each other. The water level in migration chamber "7" and migration chamber "8" can be the same, although it is also possible to envisage the level in migration chamber "7" being slightly higher than the level in migration chamber "8". Figures 2 and 3 further show the level variation in fish pass 1. An upper side of migration chambers 6 and aqueduct 7 is preferably at least partially opened, or at least light-transmitting, whereby fish will move more quickly through fish pass 1. Hydraulic coupling of migration chambers 6 of first compartment 3a and migration chambers 6 of second compartment 3b will in fact increase the number of migration chambers 6 used in fish pass 1, whereby fish pass 1 can be applied particularly advantageously in a watercourse 3 with a relatively large drop and/or a relatively large fluctuation in the drop. A further special feature of the shown barrier 2 is that the tiltable barrier valve 5 is provided with two gear racks 15 adapted for co-action with a toothing 16 arranged round a drive shaft (drive rod) 14. Barrier valve 5 can be tilted by axial rotation of drive shaft 14 by means of an electric motor 17, and the level in the watercourse can thereby be regulated. Drive shaft 17 is also coupled by means of further toothings 18, one or more chains 19 and/or one or more further rods 21, 22 (see also figure 2) to slides 20 which are connected displaceably to baffles 20 to enable regulation of the height positioning and optionally the size of the migration openings. The height positioning of migration openings 11 will thus (simultaneously) follow the height positioning of a threshold 12 of barrier valve 5, wherein the central drive is formed by electric motor 17 and drive shaft 14. The driving and coupling of slides 20 to drive shaft 14 is shown only partially in figure 1.

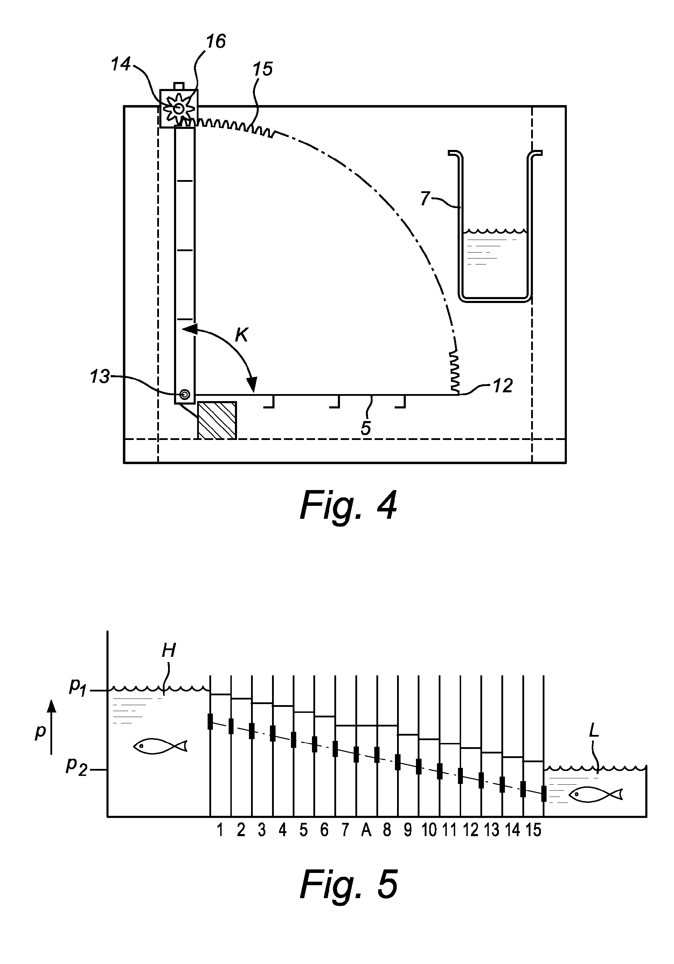

Figure 4 shows a cross-section C-C of barrier 2 according to figure 1. Shown in this figure is the passage 4 in which the tiltable barrier valve 5 and aqueduct 7 are positioned. Clearly shown is that aqueduct 7 is located at a distance from barrier valve 5, whereby aqueduct 7 does not impede tilting of barrier valve 5 about pivot axis 13 (see arrow K). Barrier valve 5 comprises a threshold 12 via which the water will flow from the higher water body (H) to the lower water body (L). The effective height of threshold 12, and thereby an intended level of the watercourse, is adjustable as shown by means of tilting the barrier valve 5 via drive shaft 14.

Figure 5 is a schematic graphic representation of the water variation in fish pass 1 of barrier 2 according to figure 1. Shown on the y axis is the water level and on the *x* axis the numbering of migration chambers 6, wherein "A" represents aqueduct 7. As shown clearly in figure 5, the level falls gradually from level p₁ associated with the higher water body (H) in the direction of level p₂ associated with the lower water level (L). Migration chamber "7", aqueduct 7 and migration chamber "8" can optionally be deemed one larger migration chamber in which the water level is or could be substantially constant. Also shown in this figure is that the height positioning of migration openings 11 also decreases gradually in the direction of the lower water body (L), whereby fish can swim at a substantially constant gradient from the lower water body (L) in the direction of the higher water body (H), this generally enhancing the operation of fish pass 1.

It will be apparent that the invention is not limited to the exemplary embodiments shown and described here, but that within the scope of the appended claims numerous variants are possible which will be self-evident to the skilled person in this field.

## Claims

1. Barrier for regulating the level in a watercourse, comprising:
- a plurality of barrier wings which enclose a passage provided with a threshold in order to allow water to flow from a first higher-lying water body to a second lower-lying water body, wherein at least one barrier wing forms a housing for a fish pass via which fish can swim from the second water body to the first water body, comprising:
○ a plurality of migration chambers connected in series, wherein successive migration chambers are separated from each other by means of a separating wall provided with at least one migration opening, wherein each separating wall is provided with at least one adjusting element for regulating the effective height positioning of the associated migration opening; and
- operating means coupled to the threshold and the adjusting elements for interrelated regulation of the height positioning of both the threshold and the migration openings.

2. Barrier as claimed in claim 1, wherein the fish pass further comprises at least one fish outlet with a water inflow opening which connects to at least one first migration chamber and is for placing in the first water body, and at least one fish inlet with a water outflow opening which connects to at least one final migration chamber and is for placing in the second water body.

3. Barrier as claimed in claim 1 or 2, wherein the operating means comprise at least one drive shaft coupled to the threshold and the adjusting elements.

4. Barrier as claimed in any of the foregoing claims, wherein the threshold forms part of a height-adjustable slide.

5. Barrier as claimed in any of the claims 1-4, wherein the threshold forms part of a tiltable barrier valve, wherein the operating means are adapted to bring about tilting of the barrier valve.

6. Barrier as claimed in any of the foregoing claims, wherein each adjusting element comprises a slide connected displaceably, in particular slidably, to the separating wall in order to enable at least partial covering of the migration opening.

7. Barrier as claimed in claim 6, wherein at least a part of an upper side of the slide defines at least a part of an underside of the migration opening.

8. Barrier as claimed in any of the foregoing claims, wherein the operating means are adapted to change the height positioning of the threshold and the migration openings in the same direction.

9. Barrier as claimed in claim 8, wherein the operating means are adapted to change the height positioning of the threshold and the migration openings to the same extent.

10. Barrier as claimed in any of the foregoing claims, wherein the operating means comprise at least one force-transmitting element, in particular a transmission.

11. Barrier as claimed in any of the foregoing claims, wherein a number of migration chambers are positioned in a first barrier wing and a number of migration chambers in a second wing.

12. Barrier as claimed in claim 11, wherein at least one migration chamber positioned in the first barrier wing is connected via at least one aqueduct to at least one migration chamber positioned in the second barrier wing, wherein the aqueduct extends through the passage.

13. Barrier as claimed in any of the foregoing claims, wherein an upper side of the fish pass takes an at least partially light-transmitting form.

14. Barrier as claimed in any of the foregoing claims, wherein the height positioning of the migration openings of successive separating walls decreases in the direction of the final migration chamber.

15. Barrier as claimed in claim 14, wherein the difference in height positioning of the migration openings of successive separating walls is less than or equal to 7.5 centimetres.
